# EUROPEAN PATENT SPECIFICATION

(11) **EP 1 069 790 B1**
(45) Date of publication and mention of the grant of the patent: **16.05.2007**
(21) Application number: 00305798.1
(22) Date of filing: 10.07.2000
(51) Int. Cl.: H04Q 7/22, H04L 12/56

(54) **Method and apparatus for dynamically assigning channel in asynchronous mobile communication system**
Verfahren und Einrichtung zur dynamischer Kanalzuweisung in einem asynchronen mobilen Kommunikationssystem
Procédé et appareil pour l'allocation dynamique de canaux dans un système de communication mobile asynchrone

(30) Priority: 10.07.1999 KR 9927896
(43) Date of publication of application: 17.01.2001
(73) Proprietor: UTStarcom Korea Limited, Icheon-si, Kyongki-do 467-7011 (KR)
(72) Inventor: Park, Jae-Hong, Kyoungki-do 467-860 (KR); Koo, Yeon-Sang, Kyoungki-do 467-860 (KR); Yang, Shin-Hyun, Kyoungki-do 467-860 (KR); Ye, Jeong-Hwa, Kyoungki-do 467-860 (KR); Lee, Yu-Ro, Kyoungki-do 467-860 (KR); Hwang, Woon-Hee, Kyoungki-do 467-860 (KR)
(74) Representative: Midgley, Jonathan Lee

(56) References cited:
- EP-A- 1 067 810
- WO-A-99/16266
- WO-A-99/66748
- US-A- 5 673 259
- US-A- 5 859 840
- TOSKALA A ET AL: "FRAMES FMA2 WIDEBAND-CDMA FOR UMTS" EUROPEAN TRANSACTIONS ON TELECOMMUNICATIONS, EUREL PUBLICATION, MILANO, IT, vol. 9, no. 4, 1 July 1998 (1998-07-01), pages 325-335, XP000778096 ISSN: 1124-318X

## Description

The present invention relates to a method and apparatus for assigning a channel in a mobile communication system; more particularly, relates to a method and apparatus for dynamically assigning a channel in an asynchronous mobile communication system when transmitting radio data packets from a base station to a mobile station (as is referred to "downlink").

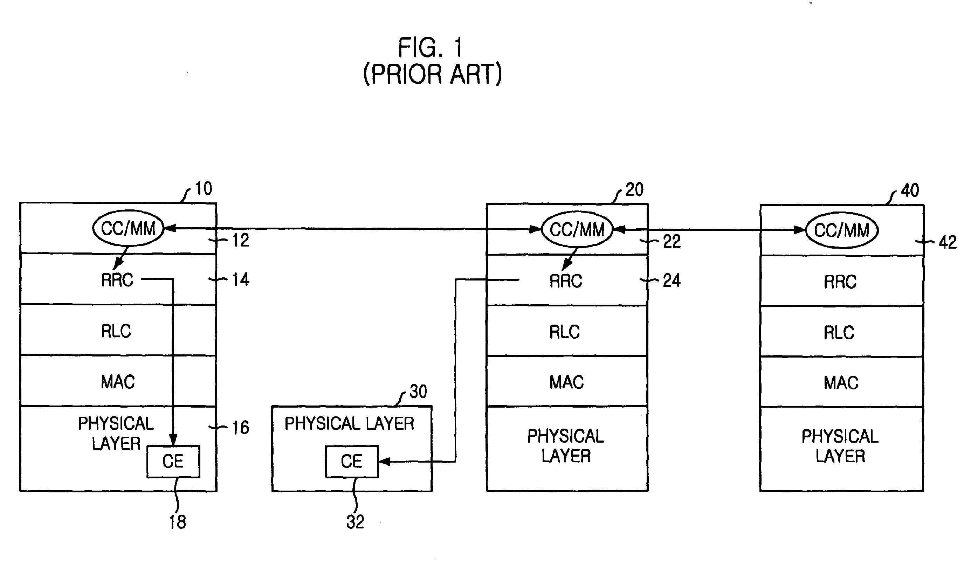

Fig. 1 is a block diagram of a channel assigning device in a conventional mobile communication system.

The mobile communication system includes a mobile station 10, a radio access network controller 20, a base transceiver station 30 and a mobile switching center 40.

The mobile station 10 includes a layer 1, a layer 2 and a layer 3. The layer 3 includes a call control/mobility management (CC/MM) entity 12 and a radio resource control (RRC) layer 14. The layer 2 includes a radio link control (RLC) layer and a medium access control (MAC) layer. The layer 1 includes physical layer 16 having a channel element 18. In substantial, the call control entity 12, the radio resource control layer 14 and the channel element 18 assigns a channel for transmitting signal.

The radio access network controller 20 includes a physical layer, a MAC layer, a RLC layer, a RRC layer 24 and a CC/MM entity 22.

The base transceiver station 30 includes a physical layer having a channel element 32.

The mobile switching center 40 includes a physical layer, a MAC layer, a RLC layer, a RRC layer and a CC/MM entity 42.

In general, a downlink shared channel (DSCH) is used when transmitting radio data packets from a base station to a mobile station in an asynchronous mobile communication system. A common packet channel (CPCH) is used when transmitting radio data packets from a mobile station to a base station in an asynchronous mobile communication system.

The DSCH transport channel and the CPCH transport channel are assigned in the RRC layer of the UTRAN. Each channel configuration is performed in the RRC layer. The channel configuration means that channel information elements, for example, a scrambling code, a spreading factor and a data rate of the assigned channel, are selected.

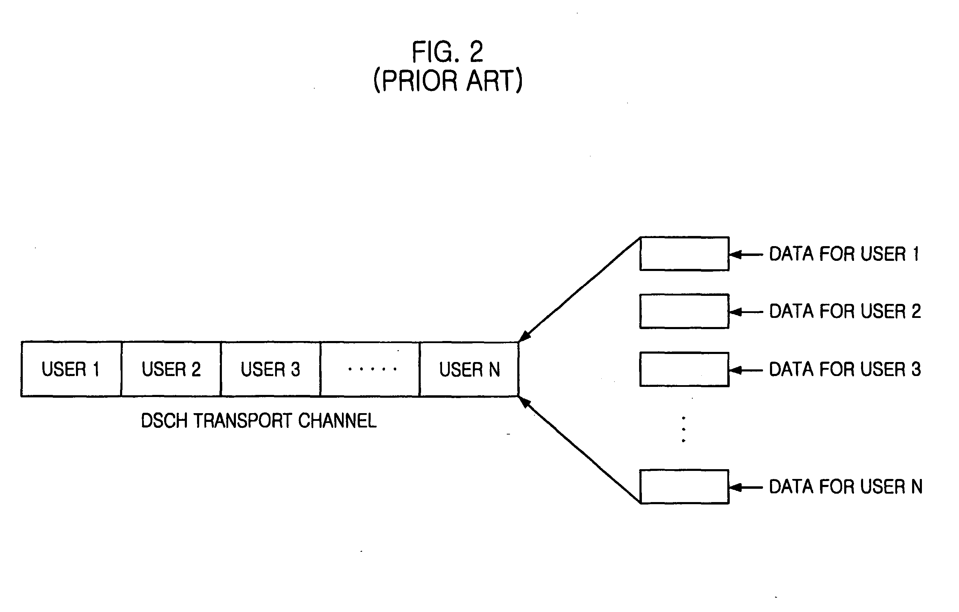

Fig. 2 is a diagram showing a conventional DSCH transport channel.

Referring to Fig. 2, the DSCH transport channel is shared by a plurality of the mobile stations when transmitting data packets from the UTRAN to the MS 10. Each of the mobile stations has different quality of service, data rate and traffic volume.

The data rate means an amount of transmitted data per a second. In general, a mean data rate and a maximum data rate are specified before call setup.

The traffic volume means an amount of data transmitted through a channel or a buffer for a predetermined period. In other words, the traffic volume is described with respect to data transmission capacity of the channel or the buffer.

When the DSCH transport channel is shared by a plurality of mobile stations, if the traffic volume of data for to one mobile station is increased, data inputted later are considerably delayed.

In order to solve such problem, a conventional mobile communication system uses a spreading factor reduction method. However, reduction of the spreading factor increases transmission power (about twice). Increased transmission power acts as interference to signals for the neighbor mobile stations, to thereby fall quality of communication service.

The paper entitled "FRAMES FMA 2 Wideband-CDMA for UMTS" by Toskala et al from European Transactions On Telecommunications, Eurel Publication, Milano, It (01-07-1998), 9(4),325-335 describes an asynchronous network communication structure which has a flexible layer 1 support for variable transmission requirements. The described system allows packet transmission to take place either on a common fixed rate transit channel or on a dedicated variable rate channel based upon packet traffic characteristics.

Therefore, it is an aim of the present invention to provide a method and apparatus for dynamically assigning a channel in an asynchronous mobile communication system when transmitting radio data packets on downlink, thereby guaranteeing the quality of service for each user.

In accordance with an aspect of the present invention, there is provided a method for operating an asynchronous mobile communication system as set out in claim 1.

In accordance with another aspect of the present invention, there is provided an apparatus for operating an asynchronous mobile communication system as set out in claim 4.

The above and other objects and features of the instant invention will become apparent from the following description of preferred embodiments taken in conjunction with the accompanying drawings, in which:
Fig. 1 is a block diagram of a channel assigning device in a conventional mobile communication system;
Fig. 2 is a diagram showing a conventional DSCH transport channel;
Fig. 3A is a diagram of protocol layers of a mobile communication system having a volume detector in accordance with the present invention;
Fig. 3B is a block diagram of the volume detector in accordance with the present invention;
Fig. 4A is a diagram of volume detectors where each volume detector measures traffic volume of data for each user and to be inputted to DSCH transport channel;
Fig. 4B is a diagram of a volume detector which measures traffic volume of data for a certain user and to be inputted to DCH transport channel.
Fig. 5 is a flow chart illustrating a method for assigning a channel in accordance with one embodiment of the present invention;
Fig. 6 is an exemplary diagram showing an assignment of a DCH transport channel because of increment of the traffic volume on DSCH transport channel;
Fig. 7 is a flow chart illustrating a method for assigning a channel in accordance with another embodiment of the present invention;
Fig. 8 is an exemplary diagram showing an assignment of another DSCH transport channel because of increment of the traffic volume on DCH transport channel; and
Fig. 9 is an exemplary diagram demonstrating a release of the DCH transport channel because of decrement of the traffic volume on DCH transport channel.

Hereinafter, preferred embodiments of the present invention will be described in detail with reference to the accompanying drawings.

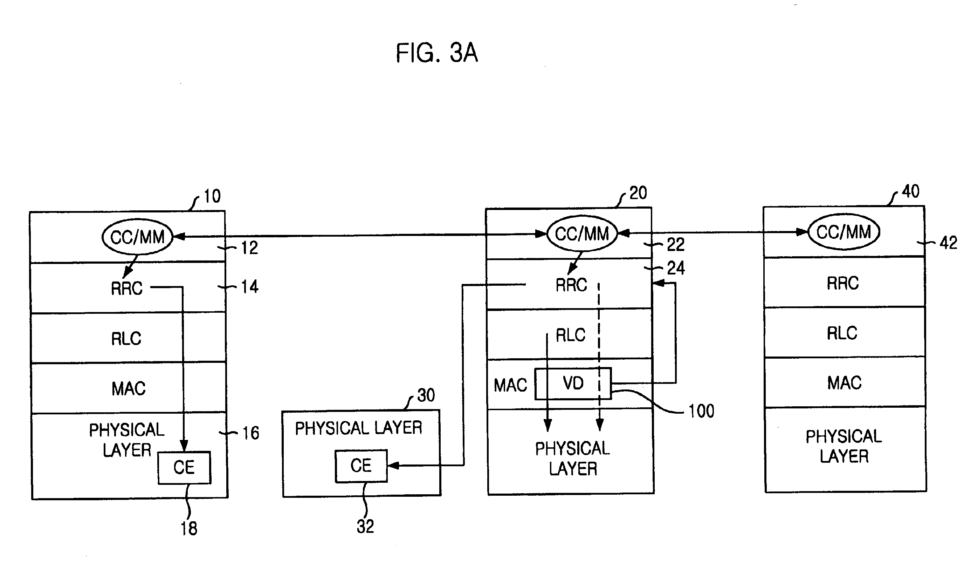

Fig. 3A is a diagram of protocol layers of a mobile communication system having a volume detector in accordance with the present invention.

The mobile communication system has similar functions as those of mobile communication system in Fig. 1 except that the system has a volume detector. Accordingly, it is assumed that the same reference numeral denotes the same function block.

The physical layer 16 offers data transport services to higher layers and transfers transport blocks over a radio interface to a mobile station. The channel element 18 performs functions for data transmission, e.g., encoding, modulation and interleaving of data to be transmitted.

The MAC layer offers data transfer services on logical channels to a higher layer (RLC layer) and on transport channels to a lower layer (the physical layer). The MAC layer is responsible for mapping of the logical channel onto the appropriate transports channel.

The RLC layer offers data transfer services on primitive to a higher layer and on logical channels to a lower layer (MAC layer). Also, the RLC layer performs an error correction process, a duplicate detection process, a ciphering process and a flow control process of the data.

The RRC layer 14 offers data transmission services on primitive to a lower layer (RLC layer) and handles a control plane signaling of the layer 3 between a user equipment (UE) and an asynchronous radio network. The RRC layer 14 manages a radio resource. Also, the RRC layer assigns/reconfigures/releases the radio resource to user equipment /Universal mobile telecommunication system Terrestrial Radio Access Network (UE/UTRAN).

The CC entity handles a call control signaling of layer 3 between the UEs and the asynchronous radio network.

The MM entity handles a mobility management signaling of layer 3 between the UEs and the asynchronous radio network.

The layers of the mobile station communicate with corresponding layers of UTRAN.

The reference numeral 20 denotes a radio access network controller including a CC/MM entity 22, a RRC layer 24, a RLC layer, a MAC layer and a physical layer. Functions of the protocol layers are similar to those described above referring to those of the mobile station 10. Accordingly, for the sake of convenience, a detailed description on functions of the protocol layers will be skipped.

The reference numeral 30 denotes a base transceiver station (BTS). The BTS 30 communicates data with the mobile station 10 through radio channels and includes a channel element. Functions of the protocol layers for a base station are similar to those described above referring to those of the mobile station 10. Accordingly, for the sake of convenience, a detailed description on functions of the protocol layers will be skipped.

The reference numeral 40 denotes a mobile switching center. Functions of the protocol layers are similar to those described above referring to those of the mobile station 10. Accordingly, for the sake of convenience, a detailed description on functions of the protocol layers will be skipped.

Though the mobile station 10 is not directly connected to the RNC 20, the mobile station 10 is connected to the RNC 20 in Fig. 1 in order to show that role of the RNC 20 is more important for channel assignment than that of the BS 30. In substantial, the channel assignment is performed in UTRAN including the RNC 20 and the BS 30.

The volume detector monitors data (e.g., control signaling data) from the RRC layer to the physical layer and data (e.g., packet data) from the RLC layer to the physical layer.

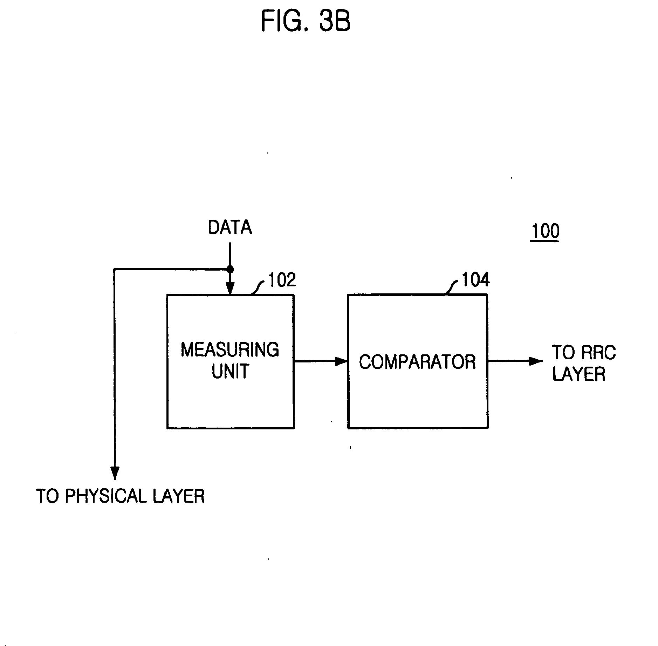

Fig. 3B is a block diagram of the volume detector 100 of Fig. 3A. The volume detector 100 includes a measuring unit 102 and a comparator 104.

The volume detector 100 monitors data packets to be transmitted to the mobile station and measures traffic volume of the data packets in a measuring unit 102. The measuring unit 102 sends the measured traffic volume of the data packets to a comparator 104. The comparator 104 compares the measured traffic volume of the data packets with predetermined values and transmits the comparing result to the RRC layer.

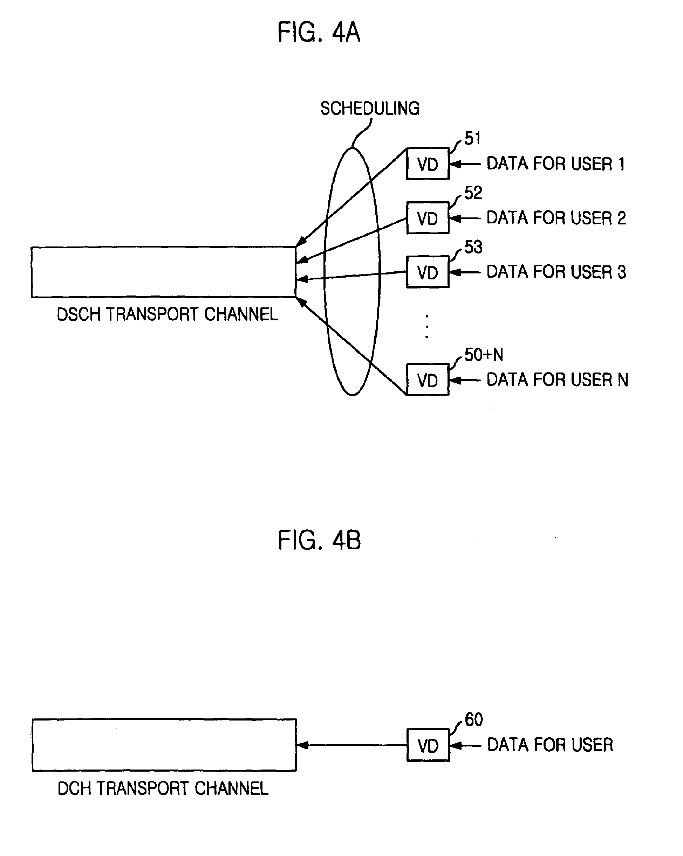

Fig. 4A is a diagram of volume detectors where each volume detector measures traffic volume of data for each user and to be inputted to DSCH transport channel.

Referring to Fig. 4A, there are the same number of volume detectors 51 to 50+N as that of mobile stations connected to the UTRAN. Each volume detector measures traffic volume of data for each mobile station and to be inputted to DSCH transport channel.

Fig. 4B is a diagram of a volume detector which measures traffic volume of data for a certain user and to be inputted to DCH transport channel.

Input parameters for the volume detector monitoring the traffic volume of the data to inputted to the DSCH and DCH transport channels are as follows:
a) Maximum buffer threshold U_limit
b) Minimum buffer threshold L_limit
c) Traffic descriptor including peak rate, mean rate and packet delay variation.

The volume detector obtains these parameters from a call admission controller (CAC)(not shown in the drawing) in a radio resource management (RRM) unit of the RRC layer. Dynamic channel assignment and channel switching are performed in accordance with measuring results of the volume detector.

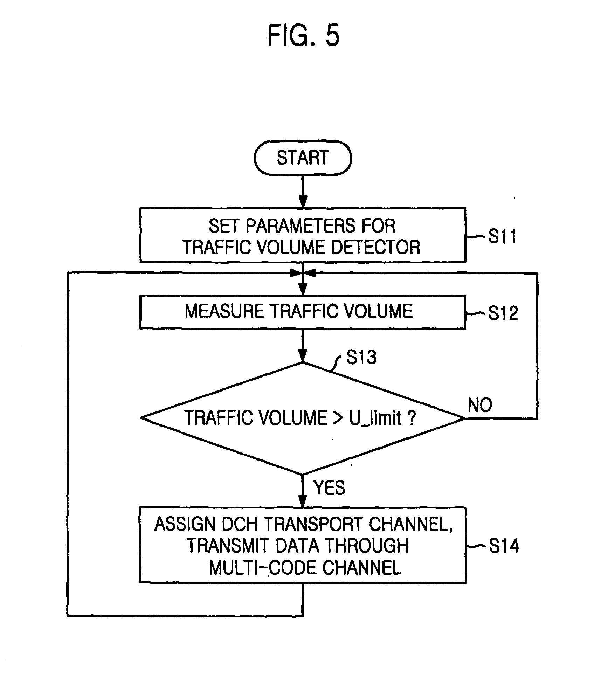

Fig. 5 is a flow chart illustrating a method for assigning a channel in accordance with one embodiment of the present invention.

First, parameters for the traffic volume detector, which are described above, are set and stored on a memory device in the traffic volume detector at step S11. The volume detector measures traffic volume of data to be inputted into the DSCH transport channel for a predetermined time at step S12. Also, the volume detector monitors whether the data to be inputted to the transport channel has characteristics of the traffic descriptor set at step S11.

At step S13, it is determined whether the measured traffic volume is larger than a maximum buffer threshold U_limit. If the measured traffic volume is smaller than the maximum buffer threshold U_limit, the data is transmitted through only the assigned DSCH transport channel.

If the measured traffic volume of data for a mobile station is larger than the maximum buffer threshold U_limit, at step S14, a DCH transport channel is assigned to the mobile station. The data is transmitted through two transport channels multi-coded.

The DCH transport channel is assigned to only a mobile station to receive data of which traffic volume is increased. In other words, only when the traffic volume of data for the mobile station is larger than the maximum buffer threshold U_limit, the DCH transport channel is assigned. At least one DCH transport channel can be simultaneously assigned to each user.

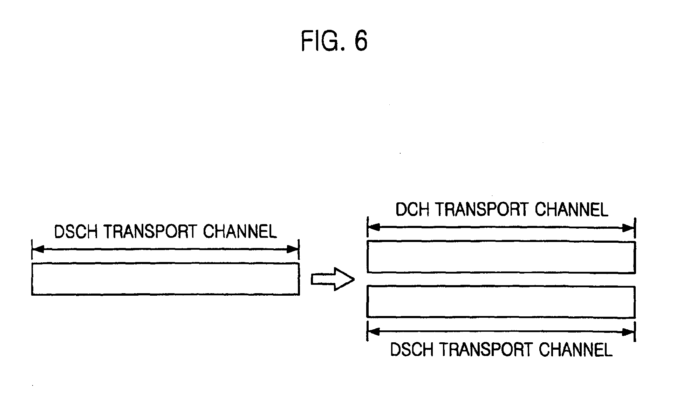

Fig. 6 is an exemplary diagram of transport channels showing an assignment of a DCH transport channel because of increment of the traffic volume on DSCH transport channel.

The data for a mobile station is transmitted through a DSCH transport channel as illustrated on the left side of Fig. 6. When the traffic volume is increased, in other words, is larger than the maximum buffer threshold U_limit, a DCH transport channel is additionally assigned to the mobile station as described on the right side of Fig. 6.

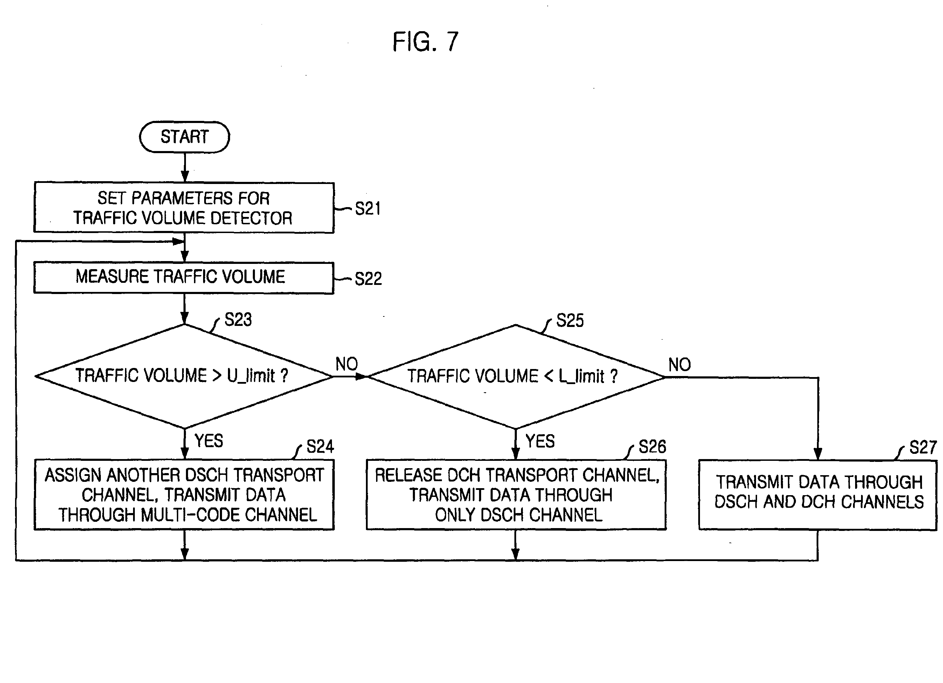

Fig. 7 is a flow chart illustrating a method for assigning a channel in accordance with another embodiment of the present invention.

First, parameters for the traffic volume detector, e.g., the maximum buffer threshold U_limit, the minimum buffer threshold and the traffic descriptor, are set and stored on a memory device in the traffic volume detector at step S21.

The volume detector measures traffic volume of data to be inputted into the DSCH transport channel for a predetermined time at step S22. Also, the volume detector monitors whether the data to be inputted to the DSCH transport channel has characteristics of the traffic descriptor set at step S21.

At step S23, it is determined whether the measured traffic volume of the data for a mobile station is larger than a maximum buffer threshold U_limit. If the measured traffic volume of the data for the mobile station is larger than the maximum buffer threshold U_limit, at step S24, an additional DSCH transport channel is assigned to the mobile station and the data is transmitted through the three transport channels, two DSCH and one DCH transport channels which are multi-coded.

If the traffic volume of the data for the mobile station is not larger than the maximum buffer threshold U_limit, the process continues to step S25 to determine whether the traffic volume of the data is smaller than the minimum buffer threshold L_limit. If the traffic volume is smaller than the minimum buffer threshold L_limit, the assigned DCH transport channel is released and the data is transmitted through only the DSCH transport channel to the mobile station at step S26.

If the traffic volume of the data is larger than the minimum buffer threshold L_limit and smaller than the maximum buffer threshold U_limit, at step 27, the data is transmitted through one DSCH and one DCH transport channels which are already assigned.

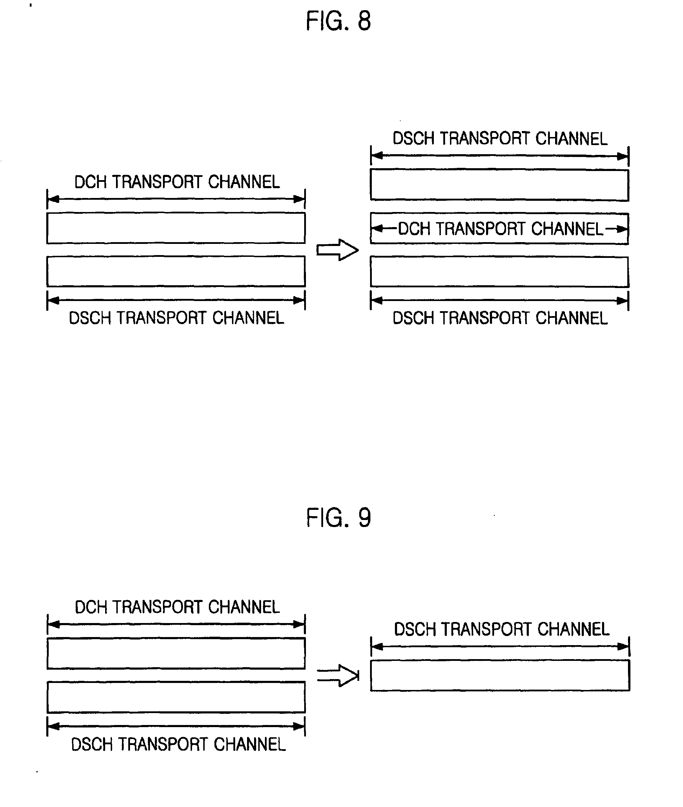

Fig. 8 is an exemplary diagram showing an assignment of another DSCH transport channel because of increment of the traffic volume on DCH transport channel.

The data for a mobile station is transmitted through a DSCH and a DCH transport channels as illustrated on the left side of Fig. 8. When the traffic volume is increased, in other words, is larger than the maximum buffer threshold U_limit, a DSCH transport channel is additionally assigned to the mobile station as described on the right side of Fig. 8.

Fig. 9 is an exemplary diagram demonstrating a release of the DCH transport channel because of decrement of the traffic volume on DCH transport channel.

The data for a mobile station is transmitted through a DSCH and a DCH transport channels as illustrated on the left side of Fig. 9. When the traffic volume is decreased, in other words, is smaller than the minimum buffer threshold L_limit, the DCH transport channel is released and the data is transmitted through only the DSCH transport channel as described on the right side of Fig. 9.

According to a dynamic channel assigning method in accordance with the present invention, an additional DCH channel is assigned to a mobile station when traffic volume of data for the mobile station is increased and therefore channel switching happens. The dynamic channel assigning method prevents quality of service from falling without causing interference to the other mobile stations where the fall of quality of service results from increment of the traffic volume.

The DCH transport channel is released when the traffic volume is decreased. This dynamic channel assignment makes the communication systems stable and efficient.

Although the preferred embodiments of the invention have been disclosed for illustrative purpose, those skilled in the art will be appreciate that various modifications, additions and substitutions are possible, without departing from the scope of the invention as disclosed in the accompanying claims.

## Claims

1. A method for operating an asynchronous mobile communication system transmitting data packets from a base station to a plurality of mobile stations through a first downlink shared channel (DSCH) transport channel, the method comprising the steps of
a) repeatedly measuring (S22) a traffic volume of data packets for each of the mobile stations, wherein at least a first portion of the data packets for each mobile station are transmitted via the first DSCH transport channel;
b) determining (S25) for each of the mobile stations whether the measured traffic volume of data packets for a mobile station is larger than a first predetermined value;
c) once the measured traffic volume of the data packets for a mobile station is larger than the first predetermined value, assigning (S26) a dedicated channel (DCH) transport channel to the mobile station and transmitting at least a second portion of the data packets for the mobile station via the combination of the first DSCH transport channel and the DCH transport channel;
d) determining (S23) for each of the mobile stations whether the measured traffic volume of data packets for a mobile station is larger than a second predetermined value, wherein the second predetermined value is larger than the first predetermined value; and
e) once the measured traffic volume of the data packets for the mobile station is larger than the second predetermined value, assigning (S24) a second DSCH transport channel to the mobile station and transmitting at least a third portion of the data packets for the mobile station through the combination of the first DSCH transport channel, the DCH transport channel, and the second DSCH transport channel.

2. The method as recited in claim 1, wherein the first predetermined value is a value representing a maximum buffer threshold.

3. The method as recited in claim 2, wherein the traffic volume of data packets transmitted via the DCH transport channel corresponds to the result of subtraction of the first predetermined value from the total traffic volume of data packets for the mobile station.

4. An apparatus for operating an asynchronous mobile communication system transmitting data packets from a base station to a plurality of mobile stations through a first downlink shared channel (DSCH) transport channel, the apparatus comprising:
means for repeatedly measuring a traffic volume of data packets for each of the mobile stations, wherein at least a first portion of the data packets for each mobile station are transmitted via the first DSCH transport channel;
means for determining for each of the mobile stations whether the measured traffic volume of data packets for a mobile station is larger than a first predetermined value;
means for assigning, once the measured traffic volume of the data packets for a mobile station is larger than the first predetermined value, a dedicated channel (DCH) transport channel to the mobile station and for transmitting at least a second portion of the data packets for the mobile station via the combination of the first DSCH transport channel and the DCH transport channel,
means for determining for each of the mobile stations whether the measured traffic volume of data packets for a mobile station is larger than a second predetermined value, wherein the second predetermined value is larger than the first predetermined value; and
means for assigning, once the measured traffic volume of the data packets for the mobile station is larger than the second predetermined value, a second DSCH transport channel to the mobile station and for transmitting at least a third portion of the data packets for the mobile station through the combination of the first DSCH transport channel, the DCH transport channel, and the second DSCH transport channel.

5. The apparatus as recited in claim 4, wherein the first predetermined value is a value representing a maximum buffer threshold.

6. The apparatus as recited in claim 5, wherein the traffic volume of data packets transmitted via the DCH transport channel corresponds to the result of subtraction of the first predetermined value from the total traffic volume of data packets for the mobile station.

7. The method as recited in claim 1 or 2, wherein transmitting at least the second portion of data packets of the step c) includes the steps of:
c1) encoding the data packets to generate encoded data packets;
c2) modulating the encoded data packets to provide modulated data packets;
c3) converting the modulated data packets into high frequency transmission signals; and
c4) radiating the high frequency transmission signals through the first DSCH and the DCH transport channels.

8. The apparatus as recited in claim 4 or 5, wherein the means for transmitting at least a second portion of the data packets includes:
means for encoding the data packets to generate encoded data packets;
means for modulating the encoded data packets to provide modulated data packets;
means for converting the modulated data packets into high frequency signals; and
means for radiating converted data packets through the first DSCH and the DCH transport channels.

## Patentansprüche

1. Verfahren zum Operieren eines asynchronen Mobilkommunikationssystems, das Datenpakete von einer Basisstation zu einer Pluralität von Mobilstationen durch einen ersten geteilten Abwärtskanal-(DSCH)-Transportkanal überträgt, das Verfahren die folgenden Schritte umfassend:
a) wiederholtes Messen (S22) eines Verkehrsvolumens von Datenpaketen für jede der Mobilstationen, wobei mindestens ein erster Teil der Datenpakete für jede Mobilstation über den ersten DSCH-Transportkanal übertragen wird;
b) Ermitteln (S25) für jede der Mobilstationen, ob das gemessene Verkehrsvolumen von Datenpaketen für eine Mobilstation größer ist als ein erster vorbestimmter Wert;
c) sobald das gemessene Verkehrsvolumen der Datenpakete für eine Mobilstation größer ist als der erste vorbestimmte Wert, Zuweisen (S26) eines dedizierten Kanal-(DCH)-Transportkanals zu der Mobilstation und Übertragen von mindestens einem zweiten Teil der Datenpakete für die Mobilstation über die Kombination des ersten DSCH-Transportkanals und des DCH-Transportkanals;
d) Ermitteln (S23) für jede der Mobilstationen, ob das gemessene Verkehrsvolumen von Datenpaketen für eine Mobilstation größer ist als ein zweiter vorbestimmter Wert, wobei der zweite vorbestimmte Wert größer ist als der erste vorbestimmte Wert; und
e) sobald das gemessene Verkehrsvolumen der Datenpakete für die Mobilstation größer ist als der zweite vorbestimmte Wert, Zuweisen (S24) eines zweiten DSCH-Transportkanals zu der Mobilstation und Übertragen von mindestens einem dritten Teil der Datenpakete für die Mobilstation durch die Kombination des ersten DSCH-Transportkanals, des DCH-Transportkanals und des zweiten DSCH-Transportkanals.

2. Verfahren nach Anspruch 1, wobei der erste vorbestimmte Wert ein Wert ist, der einen maximalen Puffer-Schwellenwert repräsentiert.

3. Verfahren nach Anspruch 2, wobei das Verkehrsvolumen der Datenpakete, die über den DCH-Transportkanal übertragen werden, mit dem Ergebnis der Subtraktion des ersten vorbestimmten Werts von dem gesamten Verkehrsvolumen von Datenpaketen für die Mobilstation korrespondiert.

4. Vorrichtung zum Operieren eines asynchronen Mobilkommunikationssystems, das Datenpakete von einer Basisstation zu einer Pluralität von Mobilstationen durch einen ersten geteilten Abwärtskanal-(DSCH)-Transportkanal überträgt, die Vorrichtung umfassend:
Mittel zum wiederholten Messen eines Verkehrsvolumens von Datenpaketen für jede der Mobilstationen, wobei mindestens ein erster Teil der Datenpakete für jede Mobilstation über den ersten DSCH-Transportkanal übertragen wird;
Mittel zum Ermitteln für jede der Mobilstationen, ob das gemessene Verkehrsvolumen von Datenpaketen für eine Mobilstation größer ist als ein erster vorbestimmter Wert;
Mittel zum Zuweisen, sobald das gemessene Verkehrsvolumen der Datenpakete für eine Mobilstation größer ist als der erste vorbestimmte Wert, eines dedizierten Kanal-(DCH)-Transportkanals zu der Mobilstation und zum Übertragen von mindestens einem zweiten Teil der Datenpakete für die Mobilstation über die Kombination des ersten DSCH-Transportkanals und des DCH-Transportkanals;
Mittel zum Ermitteln für jede der Mobilstationen, ob das gemessene Verkehrsvolumen von Datenpaketen für eine Mobilstation größer ist als ein zweiter vorbestimmter Wert, wobei der zweite vorbestimmte Wert größer ist als der erste vorbestimmte Wert; und
Mittel zum Zuweisen, sobald das gemessene Verkehrsvolumen der Datenpakete für die Mobilstation größer ist als der zweite vorbestimmte Wert, eines zweiten DSCH-Transportkanals zu der Mobilstation und zum Übertragen von mindestens einem dritten Teil der Datenpakete für die Mobilstation durch die Kombination des ersten DSCH-Transportkanals, des DCH-Transportkanals und des zweiten DSCH-Transportkanals.

5. Vorrichtung nach Anspruch 4, wobei der erste vorbestimmte Wert ein Wert ist, der einen maximalen Puffer-Schwellenwert repräsentiert.

6. Vorrichtung nach Anspruch 5, wobei das Verkehrsvolumen der Datenpakete, die über den DCH-Transportkanal übertragen werden, mit dem Ergebnis der Subtraktion des ersten vorbestimmten Werts von dem gesamten Verkehrsvolumen von Datenpaketen für die Mobilstation korrespondiert.

7. Verfahren nach Anspruch 1 oder 2, wobei Übertragen von mindestens dem zweiten Teil der Datenpakete des Schritts c) die folgenden Schritte enthält:
c1) Codieren der Datenpakete, um codierte Datenpakete zu erzeugen;
c2) Modulieren der codierten Datenpakete, um modulierte Datenpakete bereitzustellen;
c3) Konvertieren der modulierten Datenpakete in Hochfrequenz-Übertragungssignale; und
c4) Ausstrahlen der Hochfrequenz-Übertragungssignale durch den ersten DSCH- und den DCH-Transportkanal.

8. Vorrichtung nach Anspruch 4 oder 5, wobei das Mittel zum Übertragen von mindestens einem zweiten Teil der Datenpakete umfasst:
Mittel zum Codieren der Datenpakete, um codierte Datenpakete zu erzeugen;
Mittel zum Modulieren der codierten Datenpakete, um modulierte Datenpakete bereitzustellen;
Mittel zum Konvertieren der modulierten Datenpakete in Hochfrequenzsignale; und
Mittel zum Ausstrahlen der konvertierten Datenpakete durch den ersten DSCH- und den DCH-Transportkanal.

## Revendications

1. Procédé pour faire fonctionner un système de communication mobile asynchrone transmettant des paquets de données à partir d'une station de base à une pluralité de stations mobiles à travers un premier canal de transport de canal partagé de liaison descendante (DSCH), le procédé comprenant les étapes de:
a) mesure répétitivement (S22) d'un volume de trafic de paquets de données pour chacune des stations mobiles, dans lequel au moins une première partie des paquets de données pour chaque station mobile sont transmis via le premier canal de transport DSCH;
b) détermination (S25) pour chacune des stations mobiles si le volume de trafic mesuré de paquets de données pour une station mobile est plus grand qu'une première valeur prédéterminée;
c) une fois que le volume de trafic mesuré des paquets de données pour une station mobile est plus grand qu'une première valeur prédéterminée, assignation (S26) d'un canal de transport DCH (canal dédié) à la station mobile et transmission d'au moins une seconde partie des paquets de données à la station mobile via la combinaison du premier canal de transport DSCH et du canal de transport DCH;
d) détermination (S23) pour chacune des stations mobiles si le volume de trafic mesuré des paquets de données pour une station mobile est plus grand qu'une seconde valeur prédéterminée, dans lequel la seconde valeur prédéterminée est plus grande que la première valeur prédéterminée; et
e) une fois que le volume de trafic mesuré des paquets de données à la station mobile est plus grand que la seconde valeur prédéterminée, assignation (S24) d'un second canal de transport DSCH à la station mobile et transmission d'au moins une troisième partie des paquets de données à la station mobile à travers la combinaison du premier canal de transport DSCH, le canal de transport DCH et le second canal de transport DSCH.

2. Procédé selon la revendication 1, dans lequel la première valeur prédéterminée est une valeur représentant un seuil de tampon maximum.

3. Procédé selon la revendication 2, dans lequel le volume de trafic des paquets de données transmis via le canal de transport DCH correspond au résultat de soustraction de la première valeur prédéterminée à partir du volume de trafic total des paquets de données à la station mobile.

4. Appareil pour faire fonctionner un système de communication mobile asynchrone transmettant des paquets de données à partir d'une station de base à une pluralité de stations mobiles par l'intermédiaire d'un premier canal partagé de liaison descendante (DSCH), l'appareil comprenant:
un moyen pour mesurer répétitivement un volume de trafic de paquets de données pour chacune des stations mobiles, dans lequel au moins une première partie des paquets de données pour chaque station mobile sont transmis via le premier canal de transport DSCH;
un moyen pour déterminer pour chacune des stations mobiles si le volume de trafic mesuré des paquets de données pour une station mobile est plus grand qu'une première valeur prédéterminée;
un moyen pour assigner, une fois que le volume de trafic mesuré des paquets de données pour une station mobile est plus grand que la première valeur prédéterminée, un canal de transport de canal dédié (DCH) à la station mobile et pour transmettre au moins une seconde partie des paquets de données à la station mobile via la combinaison du premier canal de transport DSCH et du canal de transport DCH,
un moyen pour déterminer pour chacune des stations mobiles si le volume de trafic mesuré des paquets de données pour une station mobile est plus grand qu'une seconde valeur prédéterminée, dans lequel la seconde valeur prédéterminée est plus grande que la première valeur prédéterminée; et
un moyen pour assigner, une fois que le volume de trafic mesuré des paquets de données à la station mobile est plus grand que la seconde valeur prédéterminée, un second canal de transport DSCH à la station mobile et pour transmettre au moins une troisième partie des paquets de données à la station mobile par l'intermédiaire de la combinaison du premier canal de transport DSCH, du canal de transport DCH, et du second canal de transport DSCH.

5. Appareil selon la revendication 4, dans lequel la première valeur prédéterminée est une valeur représentant un seuil de tampon maximum.

6. Appareil selon la revendication 5, dans lequel le volume de trafic des paquets de données transmis via le canal de transport DCH correspond au résultat de soustraction de la première valeur prédéterminée à partir du volume total de trafic des paquets de données à la station mobile.

7. Procédé selon la revendication 1 ou 2, dans lequel la transmission d'au moins la seconde partie des paquets de données de l'étape c) comprend l'étape de:
c1) codage des paquets de données pour générer des paquets de données codés;
c2) modulation des paquets de données codés pour fournir des paquets de données modulés;
c3) conversion des paquets de données modulés en signaux de transmission haute fréquence; et
c4) rayonnement des signaux de transmission haute fréquence à travers les premiers canaux de transport DSCH et DCH.

8. Appareil selon la revendication 4 ou 5, dans lequel le moyen pour transmettre au moins une seconde partie des paquets de données comprend:
un moyen pour encoder les paquets de données pour générer les paquets de données codés;
un moyen pour moduler les paquets de données codés pour fournir des paquets de données modulés;
un moyen pour convertir les paquets de données modulés en signaux haute fréquence; et
un moyen pour rayonner les paquets de données convertis à travers les premiers canaux de transport DSCH et DCH.
